# EUROPEAN PATENT APPLICATION

(11) **EP 2 676 776 A1**
(43) Date of publication of application: **25.12.2013**
(21) Application number: 13172585.5
(22) Date of filing: 19.06.2013
(51) Int. Cl.: B25J 17/00

(54) **Humanoid torso mechanism**

(30) Priority: 20.06.2012 SI 201200214
(71) Applicant: INSTITUT JOZEF STEFAN, 1000 Ljubljana (SI)
(72) Inventor: Kovac, Igor, 1235 Radomlje (SI); Lenart, Borut, 1000 Ljubljana (SI); Nemec, Bojan, 1357 Notranja Gorice (SI); Scortegagna , Marko, 1357 Notranje Gorice (SI); Zlajpah Leon, 1211 ljubljana martno (SI)
(74) Representative: Grünecker, Kinkeldey, Stockmair & Schwanhäusser

(57) **Abstract**

A humanoid torso mechanism is provided that simulates the actual movement of the human body. The torso includes a unique combination of mechanism and controlled rotary axes with actuators (4-8) arranged in a geometry that enables human-like movements. The construction provides mounting surfaces for other humanoid parts such as legs (3), arms (2) or head (1). The structure of the present invention comprises five degrees of freedom. All degrees of freedom are achieved with rotary axes and are concentrated in the lower part of torso except the last one on the top. The lower torso portion of the assembly includes a torso basic rotation around the vertical axis, which is attached to a base such that the output shaft extends vertically upwards. The next axis is attached to the first axis arrangement structure for the torso tilting function. The next two axes are arranged for tilting the torso forward-and-back in the hip and for the buckling of the mechanical spine structure. That combination of buckling and bending mechanical structures is carried out in a unique way that allows the simulation of buckling and bending the spine in a way very similar to the human body. This is very realistic and effectively enforced movement that is very similar to human body movement. The last axis mounted on the top of the torso rotates the shoulder girdle around the vertical axes. Movement of each axis is driven by actuators which are attached in each joint of the torso structure and independently controlled by a computer.

## Description

### Field of invention

The present invention relates to humanoid torso mechanisms, which relates to the scope of humanoid robotics, manikins or mannequins; more particularly, the present invention relates to the humanoid torso mechanism used for the most realistic movement like the actual movement of the human body.

### Background of the invention

U.S. Pat. No. 5,394,766 describes a robotic assembly that simulates the size, appearance and movement of a human torso. The torso includes a combination of hydraulic rotary actuators, and also linear actuators arranged in geometry that enables human-like movement with up to nine degrees of freedom including six shoulder up-and-down motions and shoulder forward-and-back motions. This patent describes an industrial implementation. This complicated hydraulic arrangement needs mechanically quite a lot of space in the design, especially for linear actuators and its connection. Special attention in the design and construction was dedicated to the shoulder part and its motion. However, the spine part of torso is completely inflexible, where the rotary and linear actuators are placed in the waist. Such a major restriction in the movement causes an inconvenient motion, which is far from the convergence of the human spine flexion.

U.S. Pat. No. 6,198,247 discloses the articulated modules and robotic assemblies incorporating them, particularly mannequins used for displays and demonstrations. The modules, which are servo-articulated, can be incorporated into arms, legs, torso, neck and head of a mannequin in order to animate required motions. The spine is configured with up to two servos giving the ability to choreograph motion in two out of three possible directions: bending forward and backward, bending sideways, or rotating. With such a module arrangement different poses and different structure configurations of the mannequin can be achieved, however, the programmed positioning of such a hyper redundant mechanism is for the humanoid robot purposes not unique and makes difficulties by the control and programming. With described configuration, the spine breaks somewhere between both ends with the help of an additional actuator module. We do not get a flexible spine bending, which could simulate similar movements of the humanoid robot like a real human spine. In addition, such actuator module arrangement obtains design and payload problems in a case if we want to use the humanoid robot in working and living environment.

U.S. Pat. No. 5,845,540 discloses a pair of connected joints operated by a plurality of force imparting means, which is especially suitable for use in anthropomorphic master-slave robotic system. The main attention is focused on the both hands and upper part of torso. The remaining part is completely rigid in terms of spine flexibility and therefore does not represent a real human spine.

Ch. Ott, O. Eiberger, W. Friedl, B. Bäuml, U. Hillenbrand, Ch. Borst, Albu-Schäffer, B. Brunner, H. Hirschmüller, S. Kielhofer, R. Konietschke, M. Suppa, T. Wimböck, F. Zacharias, and G. Hirzinger: A humanoid two-arm System for Dexterous Manipulation, Proceedings of IEEE-RAS International Conference on Humanoid Robots - Humanoids 2006, pp 276-283, describe a development of two arms and hands, combined with a three degrees-of -freedom movable torso and visual system to form a complete humanoid upper body. The torso consists of four moving axes, three of which are actuated and one is passive. A first actuated roll axis is followed by two actuated pitch axes. These three joints define the posture of the torso. The tilt of the chest is fixed via a fourth pitch joint. This joint is coupled to the base via tendons, such that the tilt resulting from the preceding two joints is compensated. This allows ensuring smaller gears as well as torquing sensors with higher resolution for the actuated joints. This light-weight torso solution allows movement which could be the first attempt of flexible bending movement of the spine mechanism used in working and living environment. However, because of tendons and only one additional passive axis the structure has disadvantages by the positioning and stability. Therefore is the purposed solution not suitable for higher loads from the side of end-effectors and does not simulate human-like bending of the torso.

L. Roos, F. Guenter, A. Guignard, and A.G. Billard: Design of a Biomimetic Spine for the Humanoid Robot Robota, Proceedings of IEEE-RAS EMBS International Conference on Biomedical Robotics and Biomechatronics, Pisa, Italy February 2006, pp 1-7, describe a prototype of a 3 degrees-of-freedom articulated spine for the doll-shaped humanoid robot named Robota. The design of a spinal cord for the humanoid robot provide smooth human-like parallel means of bending forward and sideways driven with hydraulic actuators over four vertebrae, linked through spherical bearing, pistons and springs. The third DOF is implemented as a rotating tray implemented on the last vertebra. Tests on a real system have revealed some problems with hydraulics, friction, control and positioning. The purposed design can be used only for small moving forces (mini humanoid robots) with poor precision.

Jimmy Or: The development of Emotional Flexible Spine Humanoid Robots, Effective Computing, InTech, 2008, pp. 133-156, describes development of humanoid robot with just enough joints to perform all human torso movements. Instead of using tendons or expensive DC motors with Harmonic Drive Gears to control the robots, they use five RC servo motors placed serially along the spine to get a 3D movement of a torso. In such a way a prototype was developed, which is capable of expressing emotions using full-body dynamic motions. The research has shown that by carefully designing the spine mechanism, it is possible to build a flexible spine humanoid robot. However, because the structure is made of low-cost actuators placed serially along the spine, the robot, especially the torso, has limited capabilities especially limited payload and moving power and cannot be used to perform real activities or services in a working or living environment.

R.A. Brooks, C. Breazeal, M. Marjanović, B. Scassellati, M. M. Williamson: The Cog Project: Building a Humanoid Robot, Computation for metaphors, analogy, and agents (C. Nehaniv Ed.), Lecture Notes in Computer Science LNCS, Vol. 1562, Springer Verlag Heidelberg Berlin, 1999, pp 52-87, explore issues of developmental structure they have constructed an upper-torso humanoid robot called Cog. The ultimate goal of the research was to understand human cognitive abilities well enough to build a humanoid robot that develops and acts similar to a person. The major missing piece was demonstrating coherent global behaviour from the existing subsystems and sub-behaviours. In this sense can be seen also a range of motion for the torso, which is more a box-like with 3 DOF in the waist without flexible spine as a human.

The technical problem that has not been satisfactorily resolved relates to a torso movement, especially spine bending mechanism structure for the purposes on the field of humanoid robotics, manikins or moving mannequin structures that would make movements most similar to the human torso and particularly spine bending movements, which would meet the optimal conditions of body structure using a simple and efficient servo drive systems for humanoid robotics, manikins or moving mannequins in a real working or living environment.

The task and objective of the invention is to provide an appropriate torso structure, particularly spine mechanism, which will possible closely simulate the human body movement to which legs, arms and head assembly could be attached, and will be used in real working or living environment.

After the invention the task is solved by a human torso mechanism that simulates the actual movement of the human body. The body of the torso includes a unique combination of mechanism and controlled rotary joints, which are arranged in a geometry that allows the movements similar to the human movements. The structure of this invention comprises five degrees of freedom. All degrees of freedom are made with rotary axes and are concentrated in the lower part of the hull except of the last axis on the top. Buckling and bending of the mechanical structure is made in a unique way that allows simulation of spine buckling and bending, which is very similar to humans. The movement of each axis separately is done through their own power drive system, which is controlled by a computer. Rotary drive system and the whole mechanism structure is made in a way that allow attachment of any additional parts as head, legs and arms with regard to their specific functions.

### Description

The invention will be presented using embodiments and figures:
**Figure 1** shows an isometric perspective of the mechanism humanoid robot in an upright state.
**Figure 2** shows an isometric perspective of the mechanism humanoid robot buckeld forward.
**Figure 3** shows an isometric perspective of the mechanism humanoid robot buckeld back.
**Figure 4** shows an isometric perspective of the mechanism humanoid robot buckeld lateral to the right.
**Figure 5** shows the mechanism of humanoid robot torso in a straightened position in gear design that relates to the invention.
**Figure 6** shows the mechanism of humanoid robot torso in a straightened position in truss design that relates to the invention.

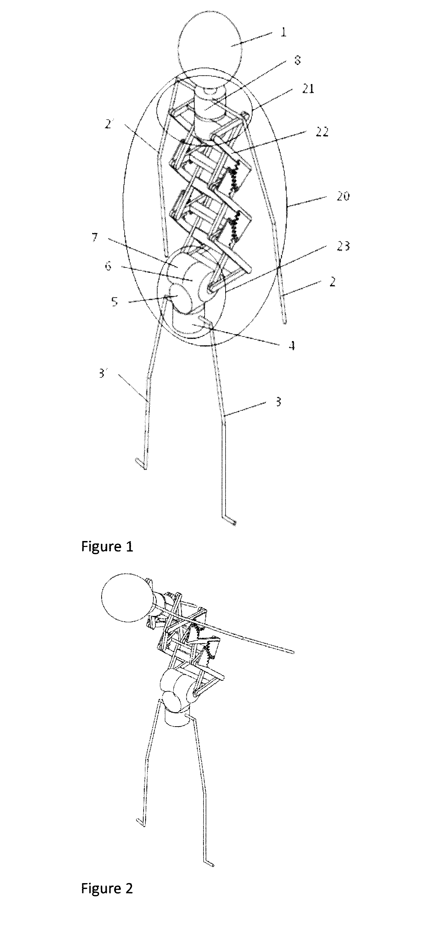

**Figure 1** shows the mechanism of a humanoid robot in an upright state, which consists of a head 1, torso 20, left arm 2, right arm 2', left leg 3 and right leg 3'. The torso 20 is composed of shoulder girdle 21, spine 22 and hips 23. The mechanism of the torso 20, which is the subject of this invention, is incorporated into the body of the humanoid robot as an interface between the head 1 left arm 2, right arm 2', left leg 3 and right leg 3'. Left leg 3 and right leg 3' are connected with hips 23. Vertical drive 4, whose rotation axis is positioned vertically, provides a full basic rotation of the spindle in relation to the left leg 3 and the right leg 3' for 150° left and right. On the vertical drive 4, a horizontal drive 5 is fixed, whose rotation axis is located horizontally and perpendicular to the axis of rotation of vertical drive 4, hip drive 6 and spine drive 7. This ensures the entire rotating mechanism with arms to the left and right. Hip drive 6 and spine drive 7 are the drives, which provide an independent bending of mechanism 22 and they are independent of each other. Hip drive 6 and spine drive 7 and their axes of rotation are positioned horizontally and perpendicular to the horizontal plane of the vertical drive 4 and the vertical plane of hip drive 6 and spine drive 7 and their axes of rotation perpendicular to the horizontal drive 5. On the upper part of the torso 20, a vertically mounted shoulder drive 8 is fixed, which is an integral part of the torso 20 and provides an independent rotation of the shoulder girdle 21 to which left arm 2, right arm 2 'and head 1 are linked.

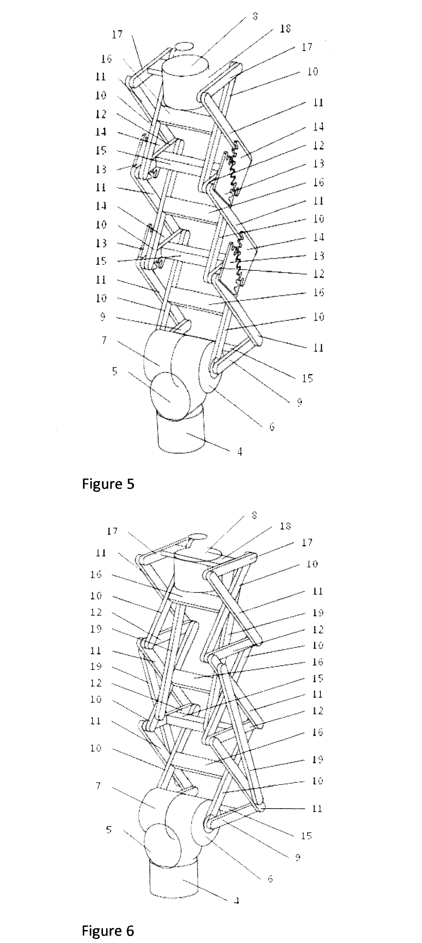

**Figure 5** shows the mechanism of torso 20 shown in Figure 1 in a straightened position in a gear design. The mechanism of the torso 20 from the Figure 1 is shown in Figure 5 as an independent supporting component, which contains vertical drive 4, horizontal drive 5, hip drive 6, spine drive 7 and shoulder drive 8, and the spine mechanism as components in the gear design of proposed invention. The mechanism of the spine 22 is in our case, in order to increase rigidity and stability of the structure of the torso 20, vertically doubled. Symmetrical design is divided into left and right mechanism of the spine, which can be, in terms of the invention itself, treated as a single or multiple assembly of mechanism of the spine, for continuous buckling of rigid and stabile mechanism spine structure. Description of the torso mechanism, starts at the hip drive 6 and goes to the top of the mechanism ending with a shoulder drive 8. In our case, the hip drive 6 and spine drive 7 are mounted in the same axis. Lower lever 9 is fixed-connected to the rotating axis of the hip drive 6. Fixed-connection between lower lever 9 and hip drive 6 would result in rotation of the whole mechanism of the spine around the axis of the hip drive 6, when that axis is rotating. It can be rotated in straightened or buckled position, which depends of rotation of the spine drive 7. The rotation of the lower lever 9 is over the horizontal connection 15 transmitted to the similar lower lever 9 mirrored to the other side of the torso 20, to achieve a rigid and robust design, if this is necessary, but it is not strictly a subject of this invention. Both lower levers 9 on each side are therefore driven by the hip drive 6, so that the both lower levers 9 on both sides move parallel. In the same axis the front diagonal lever 10 is also mounted, and is freely-rotating-connected to the axis of the hip drive 6. The front diagonal lever 10 can rotate on one side around the axis of the hip drive 6 independently from the lower lever 9. The front diagonal lever 10 is connected by the diagonal connection 16 to the same front diagonal lever 10 on the other side of the torso 20. Front diagonal lever 10, which is positioned on the other side, where the spine drive 7 is located, is fixed-connected through the flange to the spine drive 7. In our case, both axes of the hip drive 6 and spine drive 7 coincide. With the connection to the spine drive 7 the buckling of the spine in forward and backward direction is achieved. Rear diagonal levers 11 on both sides are at the other end rotary connected to the intermediate levers 12 and to the front diagonal levers 10 of the next repeated cross-parallel mechanism structure level. Front diagonal levers 10 on both sides are rotary connected to the other end of intermediate levers 12 connected with the rear diagonal levers 11 of the second repeated cross-parallel mechanism structure level. A driving sprocket wheel 13 is mounted on the rear diagonal lever 11, which provides a gear pair with a driven sprocket wheel 14, which is mounted on the rear diagonal lever 11 of the next repeated cross-parallel mechanism structure level. The gear pair, which consists of the driving sprocket wheel 13 and the driven sprocket wheel 14, is mounted on both sides of spine mechanism structure and transmits the rotational torque onto the next repeated cross-parallel mechanism structure level that causes buckling of the whole spine mechanism. Such a cross-parallel mechanism structure can be arbitrarily replicated. The final repeated cross-parallel mechanism structure ends with an upper lever 17, which is freely-rotating-connected to the rear diagonal lever 11 on one end to the front diagonal lever 10 on the other end on both sides of the torso 20. Upper levers 17 on both sides are fixed to the upper connection 18, to which shoulder drive 8 is mounted perpendicular to the vertical direction of the upper levers 17.

**Figure 6** shows the mechanism of torso 20 from Figure 1 in a straightened position in the truss design. The mechanism of the torso 20 from the Figure 1 is in Figure 6 shown as an independent supporting component, which contains vertical drive 4, horizontal drive 5, hip drive 6, spine drive 7 and shoulder drive 8 and the spine mechanism as components in the truss design of proposed invention. The design of the mechanism in Figure 6 is the same as in Figure 5. The only difference is in the transmission of rotational torque, which causes the buckling of the spine mechanism to the next repeated cross-parallel mechanism structure level. Instead of gear pairs, which consist from the driving sprocket wheels 13 and the driven sprocket wheels 14, shown in Figure 5, which transmit the rotational torque onto the next repeated cross-parallel mechanism structure level that causes buckling of the spine mechanism, the buckling of the spine mechanism is achieved by transmittion using diagonal cross levers 19. Diagonal cross levers 19 are at the bottom freely-rotating-connected to the lower third of the rear diagonal lever 11, and the other end of the diagonal cross levers 19 to the upper third of the rear diagonal lever 11 of the next repeated cross-parallel mechanism structure level. Diagonal cross levers 19 of the next cross-parallel mechanism structure level are mounted on opposite sides of cross-parallel mechanism structure, to avoid collisions allowing achieving of wider angles of buckling. In this case, diagonal cross levers 19 at the bottom side are freely-rotating-connected to the lower third of the front diagonal levers 10, and the other end of the diagonal cross levers 19 are freely-rotating-connected to the upper third of the front diagonal levers 10 of the next repeated cross-parallel mechanism structure level. Diagonal cross levers are crucial for buckling of spine mechanism 22 in Figure 1.

### Operation

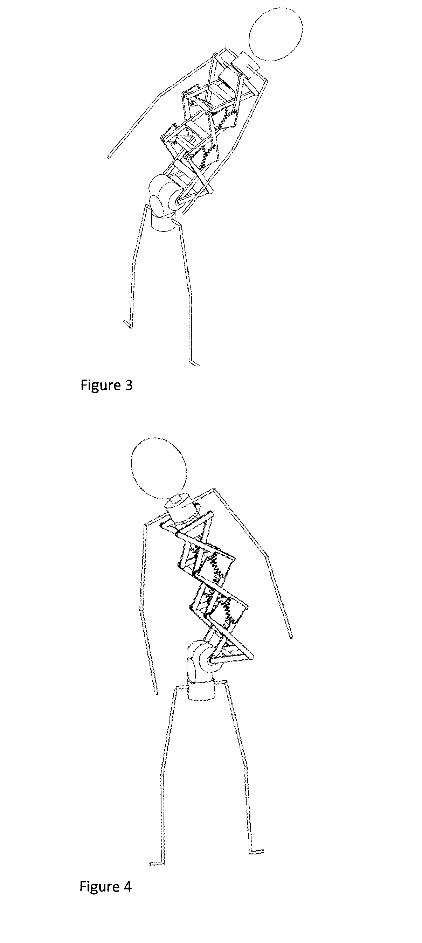

Torso in Figure 1 consists of hips 23, spine mechanism 22, the shoulder girdle 21, left leg 3 and right leg 3', left arm 2 and right arm 2', and head 1. Hips 23 consists of the following four independent drives: vertical drive 4, horizontal drive 5, hip drive 6 and spine drive 7. Rotation of vertical drive 4 causes basic rotation of the entire torso 20 to rotate around the vertical axis in the hips 23 in both directions. Horizontal drive 5 causes tilting of the entire torso 20 in to the left or the right side. Rotation of the hip drive 6 causes the bending of the entire torso 20 in hips 23 back and forward. Rotation of spine drive 7 in combination with transmitters of torque causes buckling of the spine mechanism 22 forward as shown in Figure 2, or backward as shown in figure 3. To the hips 23 left leg 3 and right leg 3' or any other mobile or fixed elements could be attached. Rotation of shoulder drive 8 causes the rotation of the shoulder girdle 21 and the head 1 independently of the spine mechanism 22 and hips 23. Spine mechanism 22 serves as a link between all of its components and as a key part of the shoulder girdle 21 and head 1. On the shoulder girdle 21 left arm 2 and right arm 2' and a head 1 can be attached, which operate independently from other components by its own drives. Existing degrees of freedom of a torso mechanism allows a redundant mechanism configuration of the torso 20, which takes the same orientation with another configuration of the mechanical position of mechanism of the torso 20. It is most clearly illustrated, when the vertical drive 4 rotates for example of 90 degrees to one side, and shoulder drive 8, for example of 90 degrees in to the opposite direction. In this case, we get a buckling of mechanism configuration to the left and right side. In Figure 4 buckling of mechanism configuration to the right side is presented. All this cases show good similarities with a human spine bending.

## Claims

1. A humanoid torso mechanism, **characterised in that** it simulates the actual movement of the human body, as a combination of tilting and bending mechanical structures that allows the simulation of tilting and bending the spine in a way very similar to the human body.

2. The mechanism according to claim 1, wherein the mechanism is driven by two independent drives providing the basic rotation and lateral tilting of the overall mechanism, which continues with the mechanical structure of the cross-parallel mechanism, where the first drive is used for tilting and the second one for bending.

3. The mechanism according to claims 1 - 2, wherein the mechanism is optionally made redundant by comprising two or more of the same or similar mechanical structures of the cross-parallel mechanism, which are connected with gears, rods or other similar elements, which results in bending and tilting mechanism, which is very similar to the movement of the human spine and ends with an independent shoulder drive on the top of the last cross-parallel mechanism, to which additional assembly can be attached.

4. The mechanism according to claims 1 - 3, wherein the mechanism allows a redundant configuration, which duplicates orientation of another configuration, when the basic rotation rotates for example by 90 degrees to one side, and an independent shoulder drive on the top of the last cross-parallel mechanism structure for example by 90 degrees in to the opposite direction, resulting in a lateral buckling of the mechanism configuration to the left and right side.

5. The mechanism according to claims 1 - 4, wherein the bending and tilting is transmitted throughout the structure by the use of a sequence of pairs of driving sprocket wheel (13) and driven sprocket wheel (14) attached to rear diagonal levers (11).

6. The mechanism according to claims 1 - 4, wherein the bending and tilting is transmitted throughout the structure by the use of a sequence of diagonal cross levers (19) attached to front diagonal levers (10) or rear diagonal levers (11).
